# EUROPEAN PATENT SPECIFICATION

(11) **EP 0 612 936 B1**
(45) Date of publication and mention of the grant of the patent: **23.10.1996**
(21) Application number: 94301235.1
(22) Date of filing: 22.02.1994
(51) Int. Cl.: F16H 29/20, F16H 25/04, F16H 29/02, F16H 25/08, F16H 31/00

(54) **Mechanism for transforming rotational into curvilinear motion**
Mechanismus zur Umwandlung einer drehenden in eine krummlinige Bewegung
Mécanisme de transformation d'un mouvement rotatif en mouvement curviligne

(30) Priority: 24.02.1993 JP 33843/93
(43) Date of publication of application: 31.08.1994
(73) Proprietor: TEIJIN SEIKI COMPANY LIMITED, Osaka (JP)
(72) Inventor: Takenaka, Hiroyuki, c/o Gifu-daiichi, Factory of, Tarui-cho, Fuwa-gun, Gifu-ken (JP); Mori, Katumi, c/o Gifu-daiichi, Factory of, Tarui-cho, Fuwa-gun, Gifu-ken (JP); Nachi, Tuyoshi, c/o Gifu-daiichi, Factory of, Tarui-cho, Fuwa-gun, Gifu-ken (JP); Hirai, Masanori, c/o Gifu-daiichi, Factory of, Tarui-cho, Fuwa-gun, Gifu-ken (JP); Kiriyama, Tomohiro, c/o Gifu-daiichi, Factory of, Tarui-cho, Fuwa-gun, Gifu-ken (JP)
(74) Representative: Pacitti, Pierpaolo A.M.E.

(56) References cited:
- EP-A- 0 114 561
- EP-A- 0 482 827
- FR-A- 989 820
- GB-A- 2 054 794
- US-A- 2 995 226
- PATENT ABSTRACTS OF JAPAN vol. 7, no. 261 (M-257) (1406) 19 November 1983 & JP-A-58 142 067 (MASAYA MURATA)

## Description

### FIELD OF THE INVENTION

The present invention relates to a motion transforming mechanism for transforming a rotational motion to a curvilinear motion.

### DESCRIPTION OF THE PRIOR ART

The motion transforming mechanism of the kind for transforming the rotation motion to the straight motion is utilized widely in the mechanical fields as a fundamental mechanical structure and for example is represented by a so-called rack-and-pinion structure consisting of a rack and a pinion held in mesh with each other. The rack-and-pinion structure is so constructed that the rotational motion of the pinion is transformed to the straight motion of the rack by way of a small number, for instance, "1" or "2" of teeth of the rack and the pinion meshing with one another. As a consequence, the rack and the pinion are inevitably required to become large in width in order to obtain a large thrust force for moving the rack with respect to the pinion. This results in such a drawback that the rack-and-pinion structure cannot avoid to become large in size.

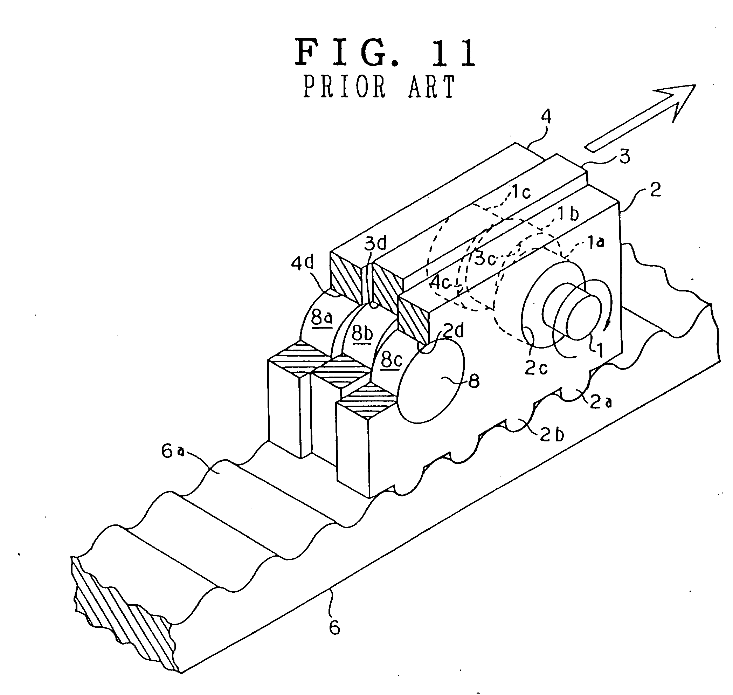

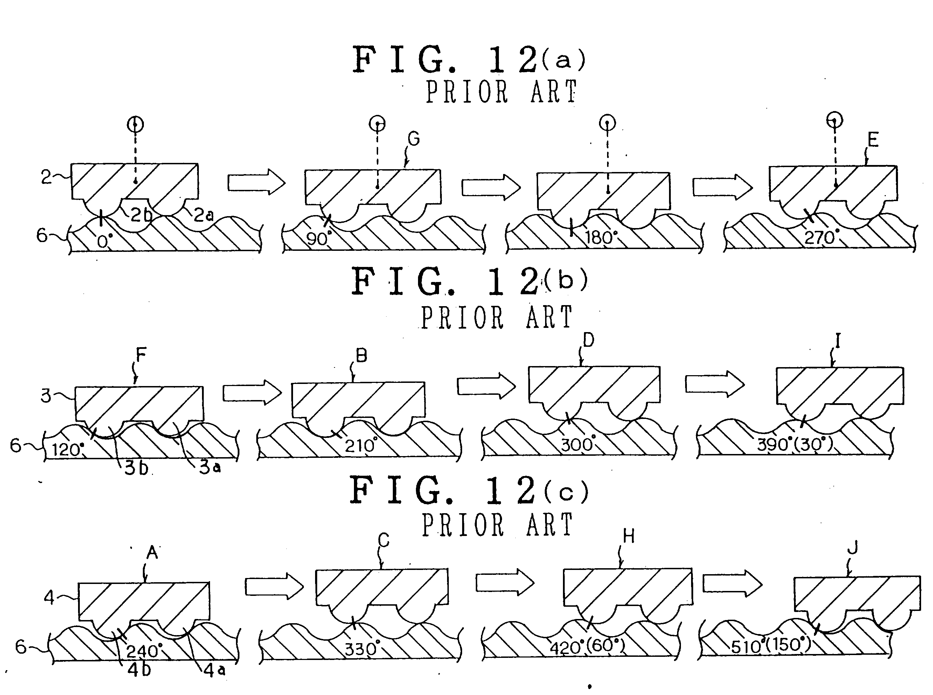

In view of the foregoing drawback, there has so far been proposed by the present applicant a prior-art motion transforming mechanism disclosed in Japanese Patent Laid-open Publication No. 4-160258 corresponding to EP-A482827 and comprising the features of the preamble of claim 1 and 15 respectively as shown in Figs. 11 and 12. Fig. 11 is a fragmentary schematic view showing an outline construction of the prior-art motion transforming mechanism and Fig. 12 is drawn for explaining the motion of the motion transforming mechanism. In Figs. 11 and 12, the motion transforming mechanism comprises a first rotation shaft 1 driven by an electric motor not shown, three rotation plates 2 to 4 each formed with a plurality of teeth 2a-2b, 3a-3b and 4a-4b and rotatably supported by the first rotation shaft 1, a straight rail 6 formed with a plurality of teeth 6a held in mesh with the teeth 2a-2b, 3a-3b and 4a-4b of the rotation plates 2 to 4 and a second rotation shaft 8 rotatably supporting the rotation plates 2 to 4 in cooperation with the first rotation shaft 1. As will be better seen from Fig. 12, the teeth 2a-2b, 3a-3b and 4a-4b of the rotation plates 2 to 4 are in the form of semicircular shape, while the teeth 6a of the straight rail 6 are in the form of wave shape.

The first rotation shaft 1 is formed with three cranked shaft portions 1a to 1c having respective eccentric axes displaced from and arranged equi-angularly around the center axis of the first rotation shaft 1 so that the cranked shaft portions 1a to 1c are angularly displaced at 120 degrees of phase difference in Figs. 11 and 12. The second rotation shaft 8 is formed with three cranked shaft portions 8a to 8c similar to those of the first rotation shaft 1. The rotation plates 2 to 4 have first cranked through bores 2c, 3c and 4c and second cranked through bores 2d, 3d and 4d which rotatably receive the cranked shaft portions 1a to 1c and 8a to 8c, respectively, and are accordingly rotated with respect to the center axis of the first rotation shaft 1 with 120 degrees of phase difference by the rotation of the first rotation shaft 1. In the construction as above, the input shaft is assumed to be rotated at angles of 0, 90, 180 and 270 degrees as shown in Fig. 12, whereupon the rotation plates 2-4, the teeth 2a-2b, 3a-3b and 4a-4b and the teeth of the straight rail 6 are maintained in positional relationship to one another as follows.

The rotation plates 2 to 4 are thus provided with 120 degrees of phase difference angularly displaced to one another by means of the first and second cranked shaft portions 1a, 1b and 1c and 8a, 8b and 8c. This means that the rotation plates 3 and 4 are advanced at 120 and 240 degrees with respect to the rotation plate 2 when the rotation plate 2 is located at its predetermined position on the rail 6. In other words, the teeth 2a-2b, 3a-3b and 4a-4b of the rotation plates 2 to 4 come to be held in meshing engagement with the teeth of the straight rail 6 at a displaced angle of 120 degrees if the teeth of the straight rail 6 have one pitch of 360 degrees.

When the teeth of one of rotation plates 2 to 4 are maintained in engagement with the ascending inclination surfaces of the teeth (see the alphabetical legends A-E), the teeth of at least one of the remaining two rotation plates are held in mesh with the descending inclination surfaces of the teeth (see the alphabetical legends F-J). Accordingly, the teeth of at least one of the rotation plates 2 to 4 are inevitably held in engagement with the descending inclination surfaces of the teeth of the straight rail 6 during one revolution of the input shaft 1 so that the one of rotation plates can procure a thrust force needed for forcing the rail 6 to be pushed depending upon the width and the number of the teeth of the rotation plate, thereby making it possible to realize a powerful motion transforming mechanism for its small size.

A draw back inherent in a prior-art motion transforming mechanism is, however, still encountered in such an advanced version of the transforming mechanism in that the motion transforming mechanism merely transforms the rotation motion to the straight motion and, for this reason, is reduced to be limited in use.

The present invention contemplates provision of an improved motion transforming mechanism overcoming the drawback of the prior-art motion transforming mechanism of the described general natures.

### SUMMARY OF THE INVENTION

According to one aspect of the present invention there is provided a motion transforming mechanism having the features as defined in claim 1.

According to a further aspect of the present invention there is provided a motion transforming mechanism having the features of claim 15.

### BRIEF DESCRIPTION OF THE DRAWINGS

The features and advantages of a motion transforming mechanism in accordance with the present invention will be more clearly understood from the following description taken in conjunction with the accompanying drawings in which:
Fig 1 is a plan view of a first embodiment of the motion transforming mechanism according to the present invention;
Fig. 2 is an enlarged cross-sectional view taken along the line II-II in Fig. 1;
Fig. 3 is an enlarged view of a rotation shaft shown in Fig. 2;
Fig. 4 is a fragmentary perspective view of an annular toothed rail shown in Fig. 2;
Fig. 5 is a perspective view of a rotation plate shown in Fig. 2;
Fig. 6 is a fragmentary cross-sectional view showing another rotation plate and another annular toothed rail;
Fig. 7 is a fragmentary plan view of a second embodiment of the motion transforming mechanism according to the present invention;
Fig. 8 is a plan view of a third embodiment of the motion transforming mechanism according to the present invention;
Fig. 9 is an additional plan view of the third embodiment of the transforming mechanism for explaining motions of a control surface of an aircraft;
Fig. 10 is a fragmentary plan view of a fourth embodiment of the motion transforming mechanism according to the present invention;
Fig. 11 is a perspective schematic view of a prior-art motion transforming mechanism; and
Fig. 12(a), (b) and (c) are fragmentary views for explaining the relative motion between each of rotation plates and a toothed straight rail shown in Fig. 11.

### DESCRIPTION OF THE PREFERRED EMBODIMENTS

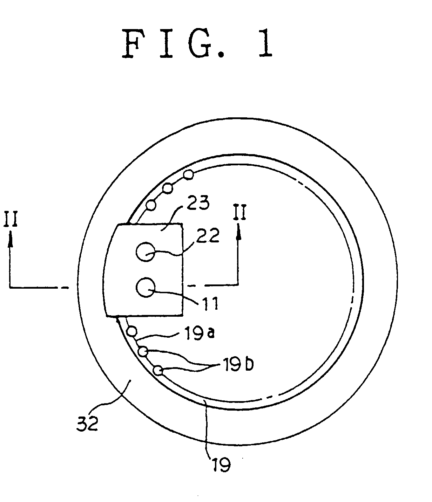

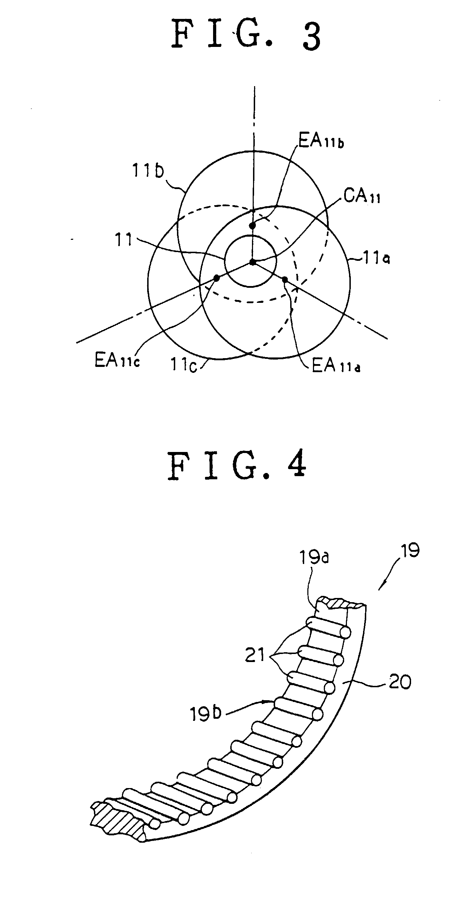

Referring to Figs. 1 to 5 of the drawings, a first preferable embodiment of a motion transforming mechanism embodying the present invention is shown as comprising a rotation shaft 11 which has a center axis CA11 and is rotated by an electric motor not shown. In addition, the rotation shaft 11 is designed to be formed with at least three cranked shaft portions 11a, 11b and 11c having respective eccentric axes EA11a, EA11b and EA11c in parallel relationship to one another and to the center axis CA11 of the rotation shaft 11. As will be seen best from Fig. 3, the eccentric axes EA11a, EA11b and EA11c of the cranked shaft portions 11a, 11b and 11c are displaced from and arranged equi-angularly around the center axis CA11 of the rotation shaft 11. This arrangement of the eccentric axes EA11a, EA11b and EA11c means that the cranked shaft portions 1a to 1c are angularly displaced at 120 degrees of phase difference because of the fact that three cranked shaft portions are formed with on the rotation shaft 11 in the present embodiment.

The motion transforming mechanism further comprises a plate assembly 12 constituted by at least three rotation plates 13 to 15 which have respective rack portions 13a 14a and 15a each formed with a plurality of teeth 13b, 14b and 15b. The rotation plates 13-15 are laterally juxtaposed with one another in such a manner that rack portions 13a, 14a and 15a of the rotation plates 13 to 15 are adjacent to one another. The rotation plates 13 to 15 are further formed with respective cranked through bores 13c, 14c and 15c respective center axes in parallel relationship to one another and to the center axis CA11 of the rotation shaft 11. Additionally, the center axes of the cranked through bores 13, 14 and 15 are displaced from and arranged equi-angularly around the center axis CA11 of the rotation shaft 11. The cranked shaft portions 11a, 11b, 11c of the rotation shaft 11 are rotatably received in the cranked through bores 13c, 14c and 15c of the rotation plates 13 to 15, respectively. The motion transforming mechanism further comprises roller bearings 16, 17 and 18 received in the cranked through bores 13c, 14c and 15c of the rotation plates 13, 14 and 15 to allow the cranked shaft portions 11a, 11b and 11c of the rotation shaft 11 to be journaled therein, respectively.

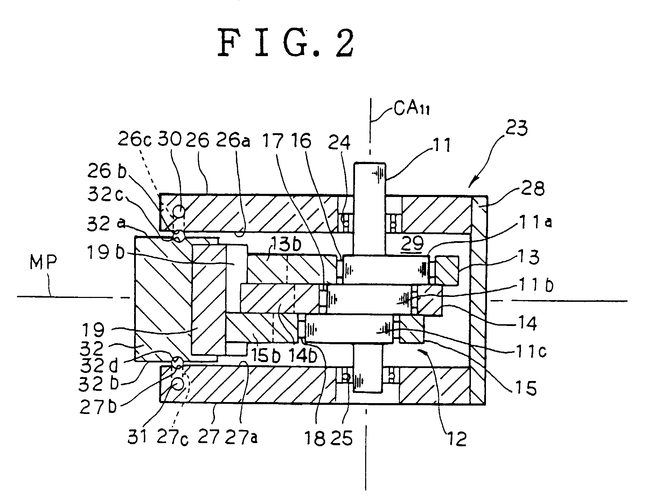

The motion transforming mechanism further comprises an annular toothed rail 19 having a mid-circumferential plane MP and perpendicularly intersected by the center axis CA11 of the rotation shaft 11 as shown in Fig. 2. In addition, the annular toothed rail 19 has an inner surface 19a configured to have a plurality of teeth 19b held in mesh with the teeth 13b, 14b and 15c of rack portions 13a, 14a and 15a of the rotation plates 13 to 15.

In the present embodiment, the teeth 13b, 14b and 15b of the rotation plates 13 to 15 have a wave configuration in cross-section taken along mid-circumferential plane MP of the annular toothed rail 19, while each of the teeth 19b of the annular toothed rail 19 has a semicircular configuration in cross-section taken along the mid-circumferential plane MP of the annular toothed rail 19. More specifically, the teeth 13b, 14b and 15b of the rotation plates 13 to 15 are, for example, in the form of a cycloidal tooth profile or a trochoidal tooth profile. As will be best seen from Fig. 4, the annular toothed rail 19 is adapted to be constituted by an annular member 20 and a plurality of cylindrical pins 21 each partly embedded in and partly protruded from the annular member 20 to form the teeth 19b of the annular toothed rail 19.

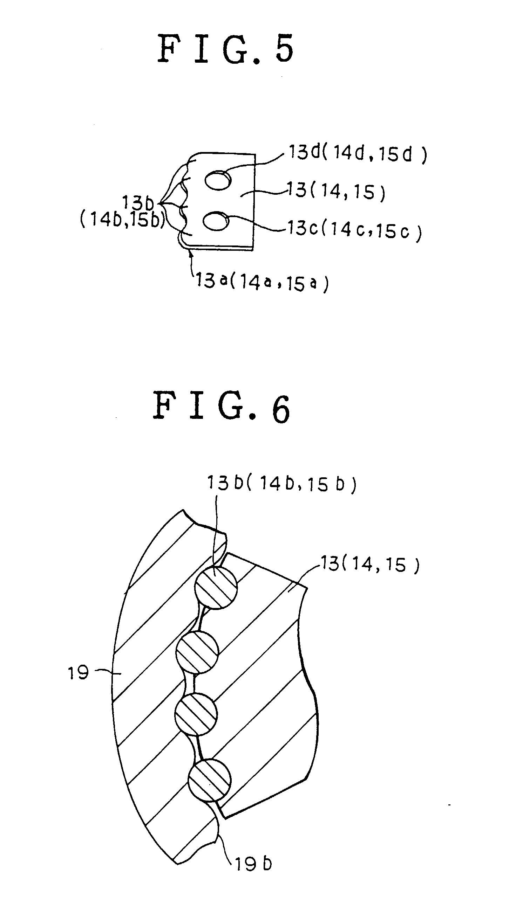

The motion transforming mechanism further comprises an additional rotation shaft 22 having a center axis perpendicularly intersecting the mid-circumferential plane MP of the annular toothed rail 19. The additional rotation shaft 22 is designed to be similar to the rotation shaft 11 and accordingly formed with at least three cranked shaft portions having respective eccentric axes in parallel relationship to one another and to the center axis of the additional rotation shaft 22, the axes of the cranked shaft portions being displaced from and arranged equi-angularly around the center axis of the additional rotation shaft 22. The rotation plates 13 to 15 of the plate assembly 12 are formed with, as shown in Fig. 5, additional cranked through bores 13d, 14d and 15d having center axes, respectively, in parallel relationship to one another and to the center axis of the additional rotation shaft 22, the center axes of the additional cranked through bores being displaced from and arranged equi-angularly around the center axis of the additional rotation shaft 22. The cranked shaft portions of the additional rotation shaft 22 are rotatably received in the additional cranked through bores 13d, 14d and 15d of the rotation plates 13 to 15, respectively.

The motion transforming mechanism further comprises a plate assembly casing 23 and a pair of ball bearings 24 and 25. The plate assembly casing 23 is adapted to include a pair of side plate members 26 and 27 spaced apart from each other and formed with respective through bores having the ball bearings 24 and 25 therein and having the rotation shaft 11 received therein through the ball bearings 24 and 25, thereby allowing the cranked shaft portions 11a, 11b and 11c of the rotation shaft 11 to be journaled therein, respectively. The plate assembly casing 23 further includes a cover plate 28 securely connected at its side end portions to the side plate members 26 and 27 to define a chamber 29 in cooperation with the annular toothed rail 19 for accommodating the plate assembly 12 therein. The side plate members 26 and 27 are formed with inner side surface portions 26a and 27a having guide grooves 26b and 27b formed thereon and guide passageways 26c and 27c, respectively. The guide grooves 26b and 27b respectively extend along and face to each of the side surface portions of the annular toothed rail 19, while the guide passageways 26c and 27c are formed therein to be open at and connected to the opposite end portions of the guide grooves 26b and 27b, respectively. The motion transforming mechanism further comprises a plurality of rollable balls 30 and 31 and an annular reinforcing member 32. The balls 30 are rollably received and circulated in the guide groove 26b and the guide passageway 26c of the inner side surface portion 26a of the side plate members 26, while the balls 31 are rollably received and circulated in the guide groove 27b and the guide passageway 27c of the inner side surface portion 27a of the side plate member 27. The annular reinforcing member 32 is designed to extend along and securely support the toothed annular rail 19 and to have the side surface portions 32a and 32b formed with respective guide grooves 32c and 32d formed thereon in opposite relationship to the guide grooves 26b and 27b of the inner side surface portions 26a and 27a of the plate members 26 and 27, respectively. The rollable balls 30 are received in the guide groove 26b of the inner side surface portion 26a of the plate member 26 and in the guide groove 32c of the side surface portion 32a of the annular reinforcing member 32. Similarly, the rollable balls 31 are received in the guide groove 27b of the inner side surface portion 27a of the plate member 27 and in the guide groove 32d of the side surface portion 32b of the annular reinforcing member 32. This results in the fact that the rollable balls 30 and 31 are rollably moved in a manner having the gap invariably regulated between each of the inner side surfaces of the side plate members 26 and 27 and each of the side surfaces of the annular toothed rail 19 and having the distance invariably regulated between the center axis CA11 of the rotation shaft 11 and the pitch circle of the annular toothed rail 19, thereby facilitating the smooth relative motion of the annular toothed rail 19 with respect to the plate assembly 12 while the rollable balls 30 and 31 are circulated through the guide grooves 26b and 27b and the guide passageways 26c and 27c of the inner side surface portions 26a and 27a of the side plate members 26 and 27.

According to the above mentioned structure of the motion transforming mechanism, the rotational motion of the rotation shaft 11 causes not only the cranked shaft portions 11a, 11b and 11c but also the rotation plates 13 to 15 to be rotated at 120 degrees of phase difference with respect to the center axis CA11 of the rotation shaft 11. At this time, the teeth 19b of annular toothed rail 19 are pressed and moved at all times by the teeth of at least one of the rotation plates 13 to 15, since the teeth 13b, 14b and 15b of the rotation plates 13 to 15 remain in face-to-face engagement with the teeth 19b of the annular toothed rail 19 at 120 degrees of phase difference angularly displaced to one another. The above-described pressing and moving actions of the rotation plates 13 to 15 are repeated by the rotation plates 13 to 15 one after another, thereby transforming the rotation motion of the rotation shaft 11 into the curvilinear motion between the plate assembly 12 and the annular toothed rail 19. For example, the annular toothed rail 19 is revolved around its the center axis when the plate assembly casing 23 supporting the plate assembly 12 is held at a standstill. On the contrary, the plate assembly casing 23 as well as the palate assembly 12 is revolved around the center axis of the annular toothed rail 19 when the annular toothed rail 19 is held at a standstill.

In the first embodiment described hereinbefore, each of the cylindrical pins 21 is partly embedded in and partly protruded from the annular member 20 to form the teeth 19b of the annular toothed rail 19. If however desired, the cylindrical pins 21 may be designed to be rotatably supported by the annular member 20. In this instance, each of the teeth of the annular toothed rail 19 is formed by a semicircular portion of each of the cylindrical pins 21 facing to the rotation plates 13; 14 and 15. Additionally, the teeth of 13b, 14b and 15b of the rotation plates 13 to 15 have, as described hereinbefore, a wave configuration in cross-section taken along mid-circumferential plane MP of the annular toothed rail 19, while each of the teeth 19b of the annular toothed rail 19 has a semicircular configuration in cross-section taken along the mid-circumferential plane MP of the annular toothed rail 19. If however desired, as shown in Fig. 6, each of the teeth of the rotation plates 13, 14 and 15 may have a semicircular configuration in cross-section taken along the mid-circumferential plane of the annular toothed rail 19, while each of the teeth of the annular toothed rail 19 may have a wave configuration in cross-section taken along the mid-circumferential plane of the annular toothed rail 19.

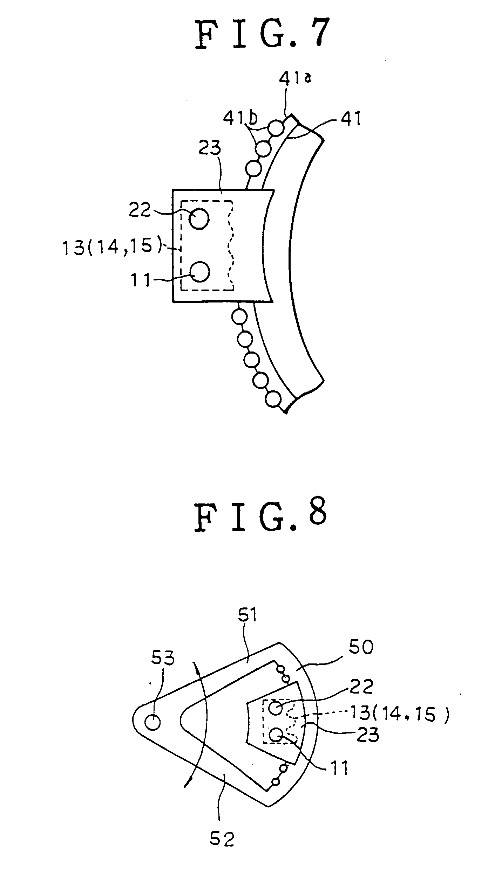

Fig. 7 shows a second embodiment of the motion transforming mechanism according to the present invention. The motion transforming mechanism in the second embodiment comprises an annular toothed rail 41 and is constructed in similar manner to that of the aforesaid first embodiment except for the difference in teeth position between the annular trothed rail 19 of the first embodiment and the annular toothed rail 41. For this reason, the following description will be merely and briefly made regarding the annular toothed rail 41. The annular toothed rail 41 has an outer surface 41a configured to have a plurality of teeth 41b held in mesh with the teeth of the rotation plates 13 to 15. The relative motion between each of the rotation plates 13 to 15 and the annular toothed rail 41 in the second embodiment is the same as that in the above-mentioned first embodiment.

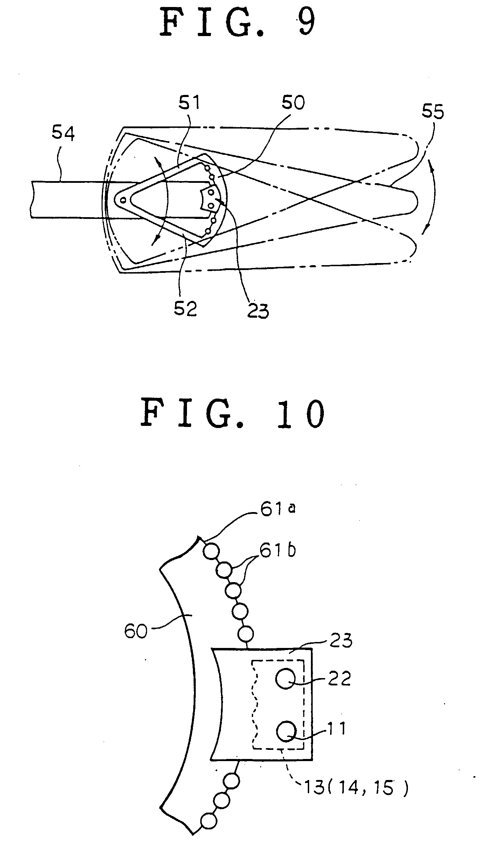

Figs. 8 and 9 show a third embodiment of the motion transforming mechanism according to the present invention and applied to a driving unit for driving a control surface of an aircraft. The motion transforming mechanism in the third embodiment comprises a curved toothed rail 50 and is constructed in similar manner to that of the above mentioned first embodiment except for the difference in shape between the annular toothed rail 19 of the first embodiment and the curved toothed rail 50. For this reason, the following description will be merely made regarding the shape of the curved toothed rail 50.

In Figs. 8 and 9, the curved toothed rail 50 has a mid-circumferential plane perpendicularly intersected by the center axis of the rotation shaft 11 and extends arcuately on the mid-circumferential plane. The curved toothed rail 50 has opposite end portions integrally formed with free end portions of swing arms 51 and 52, respectively, which are rotatably supported by a support shaft 53 secured to a fixed member 54 mounted on the aircraft. The curved toothed rail 50 is fixed to a control surface 55 such as a flap of the aircraft, while plate assembly casing 23 is secured to the fixed member 54. When the rotation shaft 11 is rotated, the rotation of the rotation shaft 11 is transformed into the relative curvilinear motion between the curved toothed rail 50 and the plate assembly casing 23, i.e., the curved toothed rail 50 is swung clockwise or counterclockwise around the center axis of the support shaft 35 in Figs. 8 and 9, thereby changing the control angle of the control surface 55 fixed to the curved toothed rail 50. The smaller one pitch of the projections of the rail 30 is, the more precise the angle of the control surface can be controlled. Furthermore, the more the waved protrusions of the rotation plates are formed, the more powerfully the aircraft can be controlled.

Fig. 10 shows a fourth embodiment of the motion transforming mechanism according to the present invention. The motion transforming mechanism in the fourth embodiment comprises a curved toothed rail 60 and is constructed in similar manner to that of the aforesaid third embodiment except for the difference in teeth position tion between the curved trothed rail 50 of the third embodiment and the curved toothed rail 60. For this reason, the following description will be merely and briefly made regarding the curved toothed rail 60. The curved toothed rail 60 has an outer surface 61a configured to have a plurality of teeth 61b held in mesh with the teeth of the rotation plates 13 to 15. The relative motion between each of the rotation plates 13 to 15 and the curved toothed rail 60 in the fourth embodiment is the same as that in the above-mentioned third embodiment.

## Claims

1. A motion transforming mechanism, comprising:
- a rotation shaft (11) having a shaft center axis (CA11) and formed with at least three cranked shaft portions (11a, 11b and 11c) having respective eccentric axes (EA11a, EA11b and EA11c) in parallel relationship to one another and to the shaft center axis (CA11), said eccentric axes (EA11a, EA11b and EA11c) being displaced from and arranged equi-angularly around said shaft center axis (CA11);
- a plate assembly (12) constituted by at least three rotation plates (13, 14 and 15) each having a rack portion (13a, 14a or 15a) formed with a plurality of teeth (13b, 14b or 15b) being laterally juxtaposed with one another in such a manner that said rack portions (13a, 14a and 15a) are adjacent to one another, said rotation plates (13, 14 and 15) being formed with cranked through bores (13c, 14c and 15c) having bore center axes, respectively, in parallel relationship to one another and to said shaft center axis (CA11), the bore center axes being displaced from and arranged equi-angularly around the shaft center axis (CA11), said cranked shaft portions (11a, 11b and 11c) being rotatably received in said cranked through bores (13c, 14c and 15c), respectively; and
- a plate assembly casing (23) supporting said plate assembly (12); characterized by
- an annular toothed rail (19; 41) having a mid-circumferential plane (MP) perpendicularly intersected by said shaft center axis (CA11) and having an inner or an outer surface (19a or 41a) configured to have a plurality of teeth (19b or 41b) held in mesh with the teeth (13b, 14b and 15b) of each of said rack portions (13a, 14a and 15a),
- said plate assembly casing (23) or said annular toothed rail (19; 41) being held at a standstill so that the rotational motion of said rotation shaft (11) causes each of said rotation plates (13, 14 and 15) to be rotated with respect to said shaft center axis (CA11) of said rotation shaft (11) and is transformed into a relative curvilinear motion between said annular toothed rail (19) and said plate assembly (12).

2. A motion transforming mechanism as set forth in claim 1, wherein said teeth (13b,14b,15b) of said rotation plates (13,14,15) have a wave configuration in cross-section taken along said mid-circumferential plane of said annular toothed rail (19 or 41) and wherein each of said teeth (19b or 41b) of said annular toothed rail (19 or 41) has a semicircular configuration in cross-section taken along said mid-circumferential plane of said annular toothed rail (19 or 41).

3. A motion transforming mechanism as set forth in claim 2, wherein said annular toothed rail (19 or 41) comprises an annular member and a plurality of fixed cylindrical pins each partly embedded in and partly protruded from said annular member to form said teeth (19b or 41b) of said annular toothed rail (19 or 41).

4. A motion transforming mechanism as set forth in claim 2, wherein said annular toothed rail (19 or 41) comprises an annular member and a plurality of rotation cylindrical pins rotatably supported by said annular member, each of said teeth (19b or 41b) of said annular toothed rail (19 or 41) being formed by a semicircular portion of each of said rotation cylindrical pins facing to said rotation plates (13,14,15).

5. A motion transforming mechanism as set forth in claim 2, wherein said teeth (13b,14b,15b) of said rotation plates (13,14,15) are in the form of a cycloidal tooth profile.

6. A motion transforming mechanism as set forth in claim 2, wherein said teeth (13b,14b,15b) of said rotation plates (13,14,15) are in the form of a trochoidal tooth profile.

7. A motion transforming mechanism as set forth in claim 1, wherein each of said teeth (13b,14b,15b) of said rotation plates (13,14,15) has a semicircular configuration in cross-section taken along said mid-circumferential plane of said annular toothed rail (19 or 41) and wherein said teeth (19b or 41b) of said annular toothed rail (19 or 41) have a wave configuration in cross-section taken along said mid-circumferential plane of said annular toothed rail (19 or 41).

8. A motion transforming mechanism as set forth in claim 7, wherein each of said rotation plates (13,14,15) comprises a plate member and a plurality of fixed cylindrical pins each partly embedded in and partly protruded from each of said plate members to form said teeth (13b,14b,15b) of each of said rotation plates (13, 14 ,15).

9. A motion transforming mechanism as set forth in claim 7, wherein each of said rotation plates (13,14,15) comprises a plate member and a plurality of rotation cylindrical pins rotatably supported by each of said plate member, each of said teeth (13b,14b,15b) of said rotation plates (13,14,15) being formed by a semicircular portion of each of said rotation cylindrical pins facing to said annular toothed rail (19 or 41).

10. A motion transforming mechanism as set forth in claim 7, wherein said teeth (19b or 41b) of said annular toothed rail (19 or 41) are in the form of a cycloidal tooth profile.

11. A motion transforming mechanism as set forth in claim 7, wherein said teeth (19b or 41b) of said annular toothed rail (19 or 41) are in the form of a trochoidal tooth profile.

12. A motion transforming mechanism as set forth in claim 1, further comprising an additional rotation shaft (22) having a center axis perpendicularly intersecting said mid-circumferential plane of said annular toothed rail (19 or 41) and formed with at least three cranked shaft portions having respective eccentric axes in parallel relationship to one another and to the center axis of said additional rotation shaft (22), the eccentric axes being displaced from and arranged equi-angularly around the center axis of said additional rotation shaft (22),
wherein said rotation plates (13,14,15) of said plate assembly (12) are formed with additional cranked through bores (13d,14d,15d) having center axes, respectively, in parallel relationship to one another and to the center axis of said additional rotation shaft (22), the center axes of said additional cranked through bores (13d,14d,15d) being displaced from and arranged equi-angularly around the center axis of said additional rotation shaft (22), and said cranked shaft portions of said additional rotation shaft (22) being rotatably received in said additional cranked through bores (13d,14d,15d) of said rotation plates, respectively.

13. A motion transforming mechanism as set forth in claim 1, further comprising at least three roller bearings (16,17,18) received in said cranked through bores (13c,14c,15c) of said rotation plates (13,14,15) to allow said cranked shaft portions (11a,11b,11c) of said rotation shaft (11) to be journaled therein, respectively.

14. A motion transforming mechanism as set forth in claim 1, wherein
- said plate assembly casing (23) including a pair of aide plate members (26 and 27) spaced apart from each other to rotatably support said rotation shaft (11) and a cover plate (28) securely connected at its side end portions to said side plate members (26 and 27) to define a chamber (29) in cooperation with said annular toothed rail (19 or 41) for accommodating said plate assembly (12) therein, said side plate members (26 and 27) being formed with respective inner side surface portions each having a guide groove (26b or 27b) formed thereon to extend along said annular toothed rail (19 or 41) and a guide passageway (26c or 27c) formed therein to be open at and connected to the opposite end portions of said guide groove (26b or 27b);
- a plurality of rollable balls (30 and 31) rollably received and circulated in said guide grooves (26b and 27b) and said guide passageways (26c and 27c) of said inner aide surface portions of said side plate members (26 and 27); and
- an annular reinforcing member (32) extending along to securely support said toothed annular rail (19 or 41) and having side surface portions respectively facing to said inner side surface portions of said side plate members (26 and 27) of said plate assembly casing (23), each of said side surface portions of said annular reinforcing member (32) having a guide groove (32c or 32d) formed thereon in opposite relationship to said guide groove (26b or 27b) of said inner side surface portion of each of said side plate members (26 and 27) of said plate assembly casing (23), said rollable balls (30 and 31) being received in said guide grooves (26b and 27b) of said inner side surface portions of said side plate members (26 and 27) and in said guide grooves (32c and 32d) of said side surface portions of said annular reinforcing member (32) to be rollably moved in a manner having the gap invariably regulated between each of the inner aide surfaces of said side plate members (26 and 27) and each of the side surfaces of said annular toothed rail (19 or 41) and having the distance invariably regulated between the center axis of said rotation shaft (11) and the pitch circle of said annular toothed rail (19 or 41) to facilitate the smooth relative motion of said annular toothed rail (19 or 41) with respect to said plate assembly (12) while said rollable balls (30 and 31) being circulated through said guide grooves (26b and 27b) and said guide passageways (26c and 27c) of said inner side surface portions of said side plate members (26 and 27) of said plate assembly casing (23).

15. A motion transforming mechanism, comprising:
- a rotation shaft (11) having a shaft center axis (CA11) and formed with at least three cranked shaft portions (11a, 11b and 11c) having respective eccentric axes (EA11a, EA11b and EA11c) in parallel relationship to one another and to said shaft center axis (CA11), the eccentric axes (EA11a, EA11b and EA11c) being displaced from and arranged equi-angularly around said shaft center axis (CA11);
- a plate assembly (12) constituted by at least three rotation plates (13,14,15) each having a rack portion (13a,14a, 15a) formed with a plurality of teeth (13b,14b,15b) being laterally juxtaposed with one another in such a manner that said rack portions (13a,14a,15a) are adjacent to one another, said rotation plates (13,14,15) being formed with cranked through bores (13c,14c,15c) having bore center axes, respectively, in parallel relationship to one another and to said shaft center axis (CA11), said bore center axes being displaced from and arranged equi-angularly around said shaft center axis (CA11), and said cranked shaft portions (11a, 11b,11c) being rotatably received in said cranked through bores (13c,14c,15c), respectively; and
- a plate assembly casing (23) supporting said plate assembly (12); characterized by
- a curved toothed rail (50; 60) having a mid-circumferential plane perpendicularly intersected by said shaft center axis (CA11) and extending arcuately on said mid-circumferential plane, said curved toothed rail (50; 60) having an inner or an outer surface (- or 61a) configured to have a plurality of teeth held in mesh with the teeth (13b,14b,15b) of each of said rack portions (13a,14a, 15a), said plate assembly casing (23) or said curved toothed rail (50;60) being held at a stanstill so that the rotational motion of said rotation shaft (11) causes each of said rotation plates (13,14,15) to be rotated with respect to said shaft center axis (CA11) and is transformed into a relative curvilinear motion between said curved toothed rail (50; 60) and said plate assembly (12).

16. A motion transforming mechanism as set forth in claim 15, wherein said teeth (13b,14b,15b) of said rotation plates (13,14,15) have a wave configuration in cross-section taken along said mid-circumferential plane of said curved toothed rail (50 or 60) and wherein each of said teeth of said curved toothed rail (50 or 60) has a semicircular configuration in cross-section taken along said mid-circumferential plane of said curved toothed rail (50 or 60).

17. A motion transforming mechanism as set forth in claim 16, wherein said curved toothed rail (50 or 60) comprises an arcuate member and a plurality of fixed cylindrical pins each partly embedded in and partly protruded from said arcuate member to form said teeth of said curved toothed rail (50 or 60).

18. A motion transforming mechanism as set forth in claim 16, wherein said curved toothed rail (50 or 60) comprises an arcuate member and a plurality of rotation cylindrical pins rotatably supported by said arcuate member, each of said teeth of said curved toothed rail (50 or 60) being formed by a semicircular portion of each of said rotation cylindrical pins facing to said rotation plates (13,14,15).

19. A motion transforming mechanism as set forth in claim 16, wherein said teeth (13b,14b,15b) of said rotation plates (13,14,15) are in the form of a cycloidal tooth profile.

20. A motion transforming mechanism as set forth in claim 16, wherein said teeth (13b,14b,15b) of said rotation plates (13,14,15) are in the form of a trochoidal tooth profile.

21. A motion transforming mechanism as-set forth in claim 15, wherein each of said teeth (13b,14b,15b) of said rotation plates (13,14,15) has a semicircular configuration in cross-section taken along said mid-circumferential plane of said curved toothed rail (50 or 60) and wherein said teeth of said curved toothed rail (50 or 60) have a wave configuration in cross-section taken along said mid-circumferential plane of said curved toothed rail (50 or 60).

22. A motion transforming mechanism as set forth in claim 21, wherein each of said rotation plates (13,14,15) comprises a plate member and a plurality of fixed cylindrical pins each partly embedded in and partly protruded from each of said plate members to form said teeth (13b,14b,15b) of each of said rotation plates.

23. A motion transforming mechanism as set forth in claim 21, wherein each of said rotation plates (13,14,15) comprises a plate member and a plurality of rotation cylindrical pins rotatably supported by each of said plate member, each of said teeth (13b,14b,15b) of said rotation plates being formed by a semicircular portion of each of said rotation cylindrical pins facing to said curved toothed rail (50 or 60).

24. A motion transforming mechanism as set forth in claim 21, wherein said teeth of said curved toothed rail (50 or 60) are in the form of a cycloidal tooth profile.

25. A motion transforming mechanism as set forth in claim 21, wherein said teeth of said curved toothed rail (50 or 60) are in the form of a trochoidal tooth profile.

26. A motion transforming mechanism as set forth in claim 15, further comprising an additional rotation shaft (22) having a center axis perpendicularly intersecting said mid-circumferential plane of said curved toothed rail (50 or 60) and formed with at least three cranked shaft portions having respective eccentric axes in parallel relationship to one another and to the center axis of said additional rotation shaft (22), the axes of said cranked shaft portions being displaced from and arranged equi-angularly around the center axis of said additional rotation shaft (22),
wherein said rotation plates (13,14,15) of said plate assembly (12) are formed with additional cranked through bores (13d,14d,15d) having center axes, respectively, in parallel relationship to one another and to the center axis of said additional rotation shaft (22), the center axes of said additional cranked through bores (13d,14d,15d) being displaced from and arranged equi-angularly around the center axis of said additional rotation shaft (22), and said cranked shaft portions of said additional rotation shaft (22) being rotatably received in said additional cranked through bores (13d,14d,15d) of said rotation plates, respectively.

27. A motion transforming mechanism as set forth in claim 15, further comprising at least three roller bearings (16, 17,18) received in said cranked through bores (13c,14c,15c) of said rotation plates (13,14,15) to allow said cranked shaft portions of said rotation shaft (11) to be journaled therein, respectively.

28. A motion transforming mechanism as set forth in claim 15, further comprising:
- said plate assembly casing (23) including a pair of side plate members (26 and 27) spaced apart from each other to rotatably support said rotation shaft (11) and a cover plate (28) securely connected at its side end portions to said side plate members (26 and 27) to define a chamber (29) in cooperation with said curved toothed rail (50 or 60) for accommodating said plate assembly (12) therein, said side plate members (26 and 27) being formed with respective inner side surface portions each having a guide groove (26b or 27b) formed thereon to extend along said curved toothed rail (50 or 60) and a guide passageway (26c or 27c) formed therein to be open at and connected to the opposite end portions of said guide groove (26b or 27b);
- a plurality of rollable balls (30 and 31) rollably received and circulated in said guide grooves (26b and 27b) and said guide passageways (26c and 27c) of said inner side surface portions of said side plate members (26 and 27); and
- a curved reinforcing member extending along to securely support said curved toothed rail (50 or 60) and having side surface portions respectively facing to said inner side surface portions of said side plate members (26 and 27) of said plate assembly casing (23), each of said side surface portions of said curved reinforcing member having a guide groove formed thereon in opposite relationship to said guide groove of said inner side surface portion of each of said side plate members of said plate assembly casing (23), said rollable balls (30 and 31) being received in said guide grooves (26b and 27b) of said inner side surface portions of said side plate members (26 and 27) and in said guide grooves of said side surface portions of said curved reinforcing member to be rollably moved in a manner having the gap invariably regulated between each of the inner side surfaces of said side plate members (26 and 27) and each of the side surfaces of said curved toothed rail member and having the distance invariably regulated between the center axis of said rotation shaft (11) and the pitch circle of said curved toothed rail (50 or 60) to facilitate the smooth relative motion of said curved toothed rail (50 or 60) with respect to said plate assembly (12) while said rollable balls (30 and 31) being circulated through said guide grooves (26b and 27b) and said guide passageways (26c and 27c) of said inner side surface portions of said side plate members (26 and 27) of said plate assembly casing (12).

## Patentansprüche

1. Bewegung-Umwandlungsmechanismus, bestehend aus:
- einer Drehwelle (11) mit einer Wellenmittelachse (CA11) und mit wenigstens drei daran ausgebildeten Kurbelwellenabschnitten (11a, 11b und 11c) mit jeweils exzentrischen Achsen (EA11a, EA11b und EA11c) in einer parallelen Beziehung zueinander und zu der Wellenmittelachse (CA11), wobei die Exzenterachsen (EA11a, EA11b und EA11c) von der Wellenmittelachse (CA11) versetzt und gleichwinklig um die Welle herum angeordnet sind;
- einer Plattenanordnung (12), die durch wenigstens drei Drehplatten (13, 14 und 15) ausgebildet ist, von welchen jede einen Zahnstangenabschnitt (13a, 14a und 15a) hat, der mit einer Vielzahl von Zähnen (13b, 14b und 15b) ausgebildet ist, die wechselseitig seitlich nebeneinanderliegend derart angeordnet sind, daß die Zahnstangenabschnitte (13a, 14a und 15a) benachbart zueinander sind, wobei die Drehplatten (13, 14 und 15) mit gekröpften Durchgangsbohrungen (13c, 14c und 15c) ausgebildet sind, die Bohrungsmittelachsen in einer parallelen Beziehung zueinander und zu der Wellenmittelachse (CA11) aufweisen, wobei die Bohrungsmittelachsen von der Wellenmittelachse (CA11) versetzt und gleichwinklig um diese herum angeordnet sind und die Kurbelwellenabschnitte (11a, 11b und 11c) in den gekröpften Durchgangsbohrungen (13c, 14c und 15c) drehbar aufgenommen sind; und
- einem Gehäuse (23) der Plattenanordnung, welches die Plattenanordnung (12) abstützt; gekennzeichnet durch
- eine ringförmige Zahnschiene (19; 41) mit einer mittigen Umfangsebene (MP), die von der Wellenmittelachse (CA11) senkrecht gekreuzt wird und eine innere oder eine äußere Fläche (19a oder 41a) aufweist, die mit einer Vielzahl von Zähnen (19b oder 41b) ausgebildet ist, welche mit den Zähnen (13b, 14b und 15b) von jedem der Zahnstangenabschnitte (13a, 14a und 15a) in Eingriff gehalten ist, wobei
- das Gehäuse (23) der Plattenanordnung oder die ringförmige Zahnschiene (19; 41) in einem Stillstand gehalten wird, sodaß die Drehbewegung der Drehwelle (11) eine Drehung von jeder der Drehplatten (13, 14 und 15) in Bezug auf die Wellenmittelachse (CA11) der Drehwelle (11) bewirkt und in eine relative krummlinige Bewegung zwischen der ringförmigen Zahnschiene (19) und der Plattenanordnung (12) umgewandelt wird.

2. Bewegung-Umwandlungsmechanismus nach Anspruch 1, bei welchem die Zähne (13b, 14b, 15b) der Drehplatten (13, 14, 15) eine Wellenausbildung in einem Querschnitt entlang der mittigen Umfangsebene der ringförmigen Zahnschiene (19 oder 41) haben und jeder der Zähne (19b oder 41b) der ringförmigen Zahnschiene (19 oder 41) eine halbkreisförmige Ausbildung in einem Querschnitt entlang der mittigen Umfangsebene der ringförmigen Zahnschiene (19 oder 41) hat.

3. Bewegung-Umwandlungsmechanismus nach Anspruch 2, bei welchem die ringförmige Zahnschiene (19 oder 41) ein ringförmiges Glied und eine Vielzahl feststehender zylindrischer Stifte aufweist, die teilweise in das ringförmige Glied eingebettet sind und teilweise von diesem vorstehen, um die Zähne (19b oder 41b) der ringförmigen Zahnschiene (19 oder 41) zu bilden.

4. Bewegung-Umwandlungsmechanismus nach Anspruch 2, bei welchem die ringförmige Zahnschiene (19 oder 41) ein ringförmiges Glied und eine Vielzahl von zylindrischen Drehstiften aufweist, die durch das ringförmige Glied drehbar abgestützt sind, wobei jeder der Zähne (19b oder 41b) der ringförmigen Zahnschiene (19 oder 41) durch einen halbkreisförmigen Bereich von jedem der zylindrischen Drehstifte gebildet ist, die auf die Drehplatten (13, 14, 15) ausgerichtet sind.

5. Bewegung-Umwandlungsmechanismus nach Anspruch 2, bei welchem die Zähne (13b, 14b, 15b) der Drehplatten (13, 14, 15) die Ausbildung eines zykloiden Zahnprofils haben.

6. Bewegung-Umwandlungsmechanismus nach Anspruch 2, bei welchem die Zähne (13b, 14b, 15b) der Drehplatten (13, 14, 15) die Ausbildung eines trochoidalen Zahnprofils haben.

7. Bewegung-Umwandlungsmechanismus nach Anspruch 1, bei welchem jeder der Zähne (13b, 14b, 15b) der Drehplatten (13, 14, 15) eine halbkreisförmige Ausbildung in einem Querschnitt entlang der mittigen Umfangsebene der ringförmigen Zahnschiene (19 oder 41) hat und bei welchem die Zähne (19b oder 41b) der ringförmigen Zahnschiene (19 oder 41) eine Wellenausbildung in einem Querschnitt entlang der mittigen Umfangsebene der ringförmigen Zahnschiene (19 oder 41) haben.

8. Bewegung-Umwandlungsmechanismus nach Anspruch 7, bei welchem jede der Drehplatten (13, 14, 15) ein Plattenglied und eine Vielzahl feststehender Zylinderstifte aufweist, von denen jeder in jedes der Plattenglieder teilweise eingebettet ist und von diesen teilweise vorsteht, um die Zähne (13b, 14b, 15b) von jeder der Drehplatten (13, 14, 15) zu bilden.

9. Bewegung-Umwandlungsmechanismus nach Anspruch 7, bei welchem jede der Drehplatten (13, 14, 15) ein Plattenglied und eine Vielzahl von zylindrischten Drehstiften aufweist, die durch jedes Plattenglied drehbar abgestützt sind, wobei jeder der Zähne (13b, 14b, 15b) der Drehplatten (13, 14, 15) durch einen halbkreisförmigen Bereich jedes der zylindrischen Drehstifte ausgebildet ist, die auf die ringförmige Zahnschiene (19 oder 41) ausgerichtet sind.

10. Bewegung-Umwandlungsmechanismus nach Anspruch 7, bei welchem die Zähne (19b oder 41b) der ringförmigen Zahnschiene (19 oder 41) die Ausbildung eines zykloiden Zahnprofils haben.

11. Bewegung-Umwandlungsmechanismus nach Anspruch 7, bei welchem die Zähne (19b oder 41b) der ringförmigen Zahnschiene (19 oder 41) die Ausbildung eines trochoidalen Zahnprofils haben.

12. Bewegung-Umwandlungsmechanismus nach Anspruch 1, welcher weiterhin eine zusätzliche Drehwelle (22) mit einer Mittelachse aufweist, welche die mittige Umfangsebene der ringförmigen Zahnschiene (19 oder 41) senkrecht kreuzt und mit wenigstens drei Kurbelwellenabschnitten ausgebildet ist, die exzentrische Achsen in paralleler Beziehung zueinander und zu der Mittelachse der zusätzlichen Drehwelle (22) haben, wobei die exzentrischen Achsen von der Mittelachse der zusätzlichen Drehwelle (22) versetzt und gleichwinklig um diese herum angeordnet sind, wobei die Drehplatten (13, 14, 15) der Plattenanordnung (12) mit zusätzlichen gekröpften Durchgangsbohrungen (13d, 14d, 15d) ausgebildet sind, deren Mittelachsen parallel zueinander und zu der Mittelachse der zusätzlichen Drehwelle (22) verlaufen, wobei die Mittelachsen der zusätzlichen gekrümmten Durchgangsbohrungen (13d, 14d, 15d) von der Mittelachse der zusätzlichen Drehwelle (22) versetzt und um diese herum gleichwinklig angeordnet sind und die Kurbelwellenabschnitte der zusätzlichen Drehwelle (22) in den zusätzlichen gekröpften Durchgangsbohrungen (13d, 14d, 15d) der Drehplatten drehbar aufgenommen sind.

13. Bewegung-Umwandlungsmechanismus nach Anspruch 1, welcher weiterhin wenigstens drei Rollenlager (16, 17, 18) aufweist, die in den gekröpften Durchgangsbohrungen (13c, 14c, 15c) der Drehplatten (13, 14, 15) aufgenommen sind, damit die Kurbelwellenabschnitte (11a, 11b, 11c) der Drehwelle (11) darin gelagert sind.

14. Bewegung-Umwandlungsmechanismus nach Anspruch 1, bei welchem
- das Gehäuse (23) der Plattenanordnung ein Paar Seitenplattenglieder (26 und 27) aufweist, die voneinander beabstandet sind, um die Drehwelle (11) drehbar abzustützen, und eine Deckelplatte (28), die an ihren seitlichen Endbereichen an den Seitenplattengliedern (26 und 27) fest verbunden ist, um eine Kammer (29) im Zusammenwirken mit der ringförmigen Zahnschiene (19 oder 41) für eine Aufnahme der Plattenanordnung (12) zu definieren, wobei die Seitenplattenglieder (26 und 27) mit betreffenden inneren Seitenflächenbereichen ausgebildet sind, von denen jeder eine darauf ausgebildete Führungsnut (26b oder 27b) hat, die entlang der ringförmigen Zahnschiene (19 oder 41) verläuft, und einen darin ausgebildeten Führungsdurchgang (26c oder 27c), der an den gegenüberliegenden Endbereichen der Führungsnut (26b oder 27b) offen und damit verbunden ist;
- eine Vielzahl von rollfähigen Kugeln (30 und 31) in den Führungsnuten (26b und 27b) und in den Führungsdurchgängen (26c und 27c) der inneren Seitenflächenbereiche der Seitenplattenglieder (26 und 27) rollfähig aufgenommen und zirkuliert sind; und
- ein ringförmiges Verstärkungsglied (32) entlang verläuft, um die ringförmige Zahnschiene (19 oder 41) sicher abzustützen, und welches Seitenflächenbereiche aufweist, die auf die inneren Seitenflächenbereiche der Seitenplattenglieder (26 und 27) des Gehäuses (23) der Plattenanordnung ausgerichtet sind, wobei jeder der Seitenflächenbereiche des ringförmigen Verstärkungsgliedes (32) eine Führungsnut (32c oder 32d) hat, die darauf in einer zu der Führungsnut (26b oder 27b) des inneren Seitenflächenbereichs von jedem der Seitenplattenglieder (26 und 27) des Gehäuses (23) der Plattenanordnung gegenüberliegenden Beziehung ausgebildet ist, wobei die rollfähigen Kugeln (30 und 31) in den Führungsnuten (26b und 27b) der inneren Seitenflächenbereiche der Seitenplattenglieder (26 und 27) und in den Führungsnuten (32c und 32d) der Seitenflächenbereiche des ringförmigen Verstärkungsgliedes (32) aufgenommen sind, um in einer solchen Art und Weise rollfähig bewegt zu werden, daß der Spalt unveränderlich zwischen jeder der inneren Seitenflächen der Seitenplattenglieder (26 und 27) und jeder der Seitenflächen der ringförmigen Zahnschiene (19 oder 41) geregelt wird und der Abstand zwischen der Mittelachse der Drehwelle (11) und dem Roll- oder Teilkreis der ringförmigen Zahnschiene (19 oder 41) unveränderlich geregelt wird, damit eine glatte relative Bewegung der ringförmigen Zahnschiene (19 oder 41) in Bezug auf die Plattenanordnung (12) ermöglicht wird, während die rollfähigen Kugeln (30 und 31) durch die Führungsnuten (26b und 27b) hindurch sowie die Führungsdurchgänge (26c und 27c) der inneren Seitenflächenbereiche der Seitenplattenglieder (26 und 27) des Gehäuses (23) der Plattenanordnung zirkuliert werden.

15. Bewegung-Umwandlungsmechanismus, bestehend aus:
- einer Drehwelle (11) mit einer Wellenmittelachse (CA11) und mit wenigstens drei daran ausgebildeten Kurbelwellenabschnitten (11a, 11b und 11c) mit jeweils exzentrischen Achsen (EA11a, EA11b und EA11c) in einer parallelen Beziehung zueinander und zu der Wellenmittel achse (CA11), wobei die Exzenterachsen (EA11a, EA11b und EA11c) von der Wellenmittelachse (CA11) versetzt und gleichwinklig um die Welle herum angeordnet sind;
- einer Plattenanordnung (12), die durch wenigstens drei Drehplatten (13, 14 und 15) ausgebildet ist, von welchen jede einen Zahnstangenabschnitt (13a, 14a und 15a) hat, der mit einer Vielzahl von Zähnen (13b, 14b und 15b) ausgebildet ist, die wechselseitig seitlich nebeneinanderliegend derart angeordnet sind, daß die Zahnstangenabschnitte (13a, 14a und 15a) benachbart zueinander sind, wobei die Drehplatten (13, 14 und 15) mit gekröpften Durchgangsbohrungen (13c, 14c und 15c) ausgebildet sind, die Bohrungsmittelachsen in einer parallelen Beziehung zueinander und zu der Wellenmittelachse (CA11) aufweisen, wobei die Bohrungsmittelachsen von der Wellenmittelachse (CA11) versetzt und gleichwinklig um diese herum angeordnet sind und die Kurbelwellenabschnitte (11a, 11b und 11c) in den gekröpften Durchgangsbohrungen (13c, 14c und 15c) drehbar aufgenommen sind; und
- einem Gehäuse (23) der Plattenanordnung, welches die Plattenanordnung (12) abstützt; gekennzeichnet durch
- eine gekrümmte Zahnschiene (50; 60) mit einer mittigen Umfangsebene, die von der Wellenmittelachse (CA11) senkrecht gekreuzt wird und an der mittigen Umfangsebene bogenförmig verläuft, wobei die gekrümmte Zahnschiene (50; 60) eine innere oder eine äußere Fläche (- oder 61a) hat, die mit einer Vielzahl von Zähnen ausgebildet ist, welche mit den Zähnen (13b, 14b, 15b) von jedem der Zahnstangenabschnitte (13a, 14a, 15a) in Eingriff gehalten ist, wobei das Gehäuse (23) der Plattenanordnung oder die gekrümmte Zahnschiene (50; 60) in einem Stillstand gehalten wird, sodaß die Drehbewegung der Drehwelle (11) eine Drehung von jeder der Drehplatten (13, 14, 15) in Bezug auf die Wellenmittelachse (CA11) bewirkt und in eine relative krummlinige Bewegung zwischen der gekrümmten Zahnschiene (50; 60) und der Plattenanordnung (12) umgewandelt wird.

16. Bewegung-Umwandlungsmechanismus nach Anspruch 15, bei welchem die Zähne (13b, 14b, 15b) der Drehplatten (13, 14, 15) eine Wellenausbildung in einem Querschnitt entlang der mittigen Umfangsebene der gekrümmten Zahnschiene (50 oder 60) haben und jeder der Zähne (19b oder 41b) der ringförmigen Zahnschiene (50 oder 60) eine halbkreisförmige Ausbildung in einem Querschnitt entlang der mittigen Umfangsebene der ringförmigen Zahnschiene (50 oder 60) hat.

17. Bewegung-Umwandlungsmechanismus nach Anspruch 16, bei welchem die gekrümmte Zahnschiene (50 oder 60) ein bogenförmiges Glied und eine Vielzahl feststehender zylindrischer Stifte aufweist, die teilweise in das bogenförmige Glied eingebettet sind und teilweise von diesem vorstehen, um die Zähne (19b oder 41b) der gekrümmten Zahnschiene (50 oder 60) zu bilden.

18. Bewegung-Umwandlungsmechanismus nach Anspruch 16, bei welchem die gekrümmte Zahnschiene (50 oder 60) ein bogenförmiges Glied und eine Vielzahl von zylindrischen Drehstiften aufweist, die durch das bogenförmige Glied drehbar abgestützt sind, wobei jeder der Zähne (19b oder 41b) der gekrümmten Zahnschiene (50 oder 60) durch einen halbkreisförmigen Bereich von jedem der zylindrischen Drehstifte gebildet ist, die auf die Drehplatten (13, 14, 15) ausgerichtet sind.

19. Bewegung-Umwandlungsmechanismus nach Anspruch 16, bei welchem die Zähne (13b, 14b, 15b) der Drehplatten (13, 14, 15) die Ausbildung eines zykloiden Zahnprofils haben.

20. Bewegung-Umwandlungsmechanismus nach Anspruch 16, bei welchem die Zähne (13b, 14b, 15b) der Drehplatten (13, 14, 15) die Ausbildung eines trochoidalen Zahnprofils haben.

21. Bewegung-Umwandlungsmechanismus nach Anspruch 15, bei welchem jeder der Zähne (13b, 14b, 15b) der Drehplatten (13, 14, 15) eine halbkreisförmige Ausbildung in einem Querschnitt entlang der mittigen Umfangsebene der gekrümmten Zahnschiene (50 oder 60) hat und bei welchem die Zähne (19b oder 41b) der gekrümmten Zahnschiene (50 oder 60) eine Wellenausbildung in einem Querschnitt entlang der mittigen Umfangsebene der gekrümmten Zahnschiene (50 oder 60) haben. haben.

22. Bewegung-Umwandlungsmechanismus nach Anspruch 21, bei welchem jede der Drehplatten (13, 14, 15) ein Plattenglied und eine Vielzahl feststehender Zylinderstifte aufweist, von denen jeder in jedes der Plattenglieder teilweise eingebettet ist und von diesen teilweise vorsteht, um die Zähne (13b, 14b, 15b) von jeder der Drehplatten (13, 14, 15) zu bilden.

23. Bewegung-Umwandlungsmechanismus nach Anspruch 21, bei welchem jede der Drehplatten (13, 14, 15) ein Plattenglied und eine Vielzahl von zylindrischten Drehstiften aufweist, die durch jedes Plattenglied drehbar abgestützt sind, wobei jeder der Zähne (13b, 14b, 15b) der Drehplatten (13, 14, 15) durch einen halbkreisförmigen Bereich jedes der zylindrischen Drehstifte ausgebildet ist, die auf die gekrümmte Zahnschiene (50 oder 60) ausgerichtet sind.

24. Bewegung-Umwandlungsmechanismus nach Anspruch 21, bei welchem die Zähne (19b oder 41b) der gekrümmten Zahnschiene (50 oder 60) die Ausbildung eines zykloiden Zahnprofils haben.

25. Bewegung-Umwandlungsmechanismus nach Anspruch 21, bei welchem die Zähne (19b oder 41b) der gekrümmten Zahnschiene (50 oder 60) die Ausbildung eines trochoidalen Zahnprofils haben.

26. Bewegung-Umwandlungsmechanismus nach Anspruch 15, welcher weiterhin eine zusätzliche Drehwelle (22) mit einer Mittelachse aufweist, welche die mittige Umfangsebene der gekrümmten Zahnschiene (50 oder 60) senkrecht kreuzt und mit wenigstens drei Kurbelwellenabschnitten ausgebildet ist, die exzentrische Achsen in paralleler Beziehung zueinander und zu der Mittelachse der zusätzlichen Drehwelle (22) haben, wobei die exzentrischen Achsen von der Mittelachse der zusätzlichen Drehwelle (22) versetzt und gleichwinklig um diese herum angeordnet sind, wobei die Drehplatten (13, 14, 15) der Plattenanordnung (12) mit zusätzlichen gekröpften Durchgangsbohrungen (13d, 14d, 15d) ausgebildet sind, deren Mittelachsen parallel zueinander und zu der Mittelachse der zusätzlichen Drehwelle (22) verlaufen, wobei die Mittelachsen der zusätzlichen gekrümmten Durchgangsbohrungen (13d, 14d, 15d) von der Mittelachse der zusätzlichen Drehwelle (22) versetzt und um diese herum gleichwinklig angeordnet sind und die Kurbelwellenabschnitte der zusätzlichen Drehwelle (22) in den zusätzlichen gekröpften Durchgangsbohrungen (13d, 14d, 15d) der Drehplatten drehbar aufgenommen sind.

27. Bewegung-Umwandlungsmechanismus nach Anspruch 15, welcher weiterhin wenigstens drei Rollenlager (16, 17, 18) aufweist, die in den gekröpften Durchgangsbohrungen (13c, 14c, 15c) der Drehplatten (13, 14,15) aufgenommen sind, damit die Kurbelwellenabschnitte (11a, 11b, 11c) der Drehwelle (11) darin gelagert sind.

28. Bewegung-Umwandlungsmechanismus nach Anspruch 15, bei welchem
- das Gehäuse (23) der Plattenanordnung ein Paar Seitenplattenglieder (26 und 27) aufweist, die voneinander beabstandet sind, um die Drehwelle (11) drehbar abzustützen, und eine Deckelplatte (28), die an ihren seitlichen Endbereichen an den Seitenplattengliedern (26 und 27) fest verbunden ist, um eine Kammer (29) im Zusammenwirken mit der gekrümmten Zahnschiene (50 oder 60) für eine Aufnahme der Plattenanordnung (12) zu definieren, wobei die Seitenplattenglieder (26 und 27) mit betreffenden inneren Seitenflächenbereichen ausgebildet sind, von denen jeder eine darauf ausgebildete Führungsnut (26b oder 27b) hat, die entlang der gekrümmten Zahnschiene (50 oder 60) verläuft, und einen darin ausgebildeten Führungsdurchgang (26c oder 27c), der an den gegenüberliegenden Endbereichen der Führungsnut (26b oder 27b) offen und damit verbunden ist;
- eine Vielzahl von rollfähigen Kugeln (30 und 31) in den Führungsnuten (26b und 27b) und in den Führungsdurchgängen (26c und 27c) der inneren Seitenflächenbereiche der Seitplattenglieder (26 und 27) rollfähig aufgenommen und zirkuliert sind; und
- ein gekrümmtes Verstärkungsglied entlang verläuft, um die gekrümmte Zahnschiene (50 oder 60) sicher abzustützen, und welches Seitenflächenbereiche aufweist, die auf die inneren Seitenflächenbereiche der Seitenplattenglieder (26 und 27) des Gehäuses (23) der Plattenanordnung ausgerichtet sind, wobei jeder der Seitenflächenbereiche des gekrümmten Verstärkungsgliedes eine Führungsnut (32c oder 32d) hat, die darauf in einer zu der Führungsnut (26b oder 27b) des inneren Seitenflächenbereichs von jedem der Seitenplattenglieder (26 und 27) des Gehäuses (23) der Plattenanordnung gegenüberliegenden Beziehung ausgebildet ist, wobei die rollfähigen Kugeln (30 und 31) in den Führungsnuten (26b und 27b) der inneren Seitenflächenbereiche der Seitenplattenglieder (26 und 27) und in den Führungsnuten (32c und 32d) der Seitenflächenbereiche des gekrümmten Verstärkungsgliedes aufgenommen sind, um in einer solchen Art und Weise rollfähig bewegt zu werden, daß der Spalt unveränderlich zwischen jeder der inneren Seitenflächen der Seitenplattenglieder (26 und 27) und jeder der Seitenflächen der ringförmigen Zahnschiene (19 oder 41) geregelt wird und der Abstand zwischen der Mittelachse der Drehwelle (11) und dem Roll- oder Teilkreis der gekrümmten Zahnschiene (50 oder 60) unveränderlich geregelt wird, damit eine glatte relative Bewegung der gekrümmten Zahnschiene (50 oder 60) in Bezug auf die Plattenanordnung (12) ermöglicht wird, während die rollfähigen Kugeln (30 und 31) durch die Führungsnuten (26b und 27b) hindurch sowie die Führungsdurchgänge (26c und 27c) der inneren Seitenflächenbereiche der Seitenplattenglieder (26 und 27) des Gehäuses (23) der Plattenanordnung zirkuliert werden.

## Revendications

1. Mécanisme de transformation de mouvement, comprenant :
- un arbre de rotation (11) ayant un axe de contre d'arbre (CA11) et formé avec au moins trois portions d'arbre coudé (11a, 11b et 11c) ayant des axes excentrés respectifs (EA11a, EA11b et EA11a) disposés parallèlement les uns aux autres et à l'axe central d'arbre (CA11), lesdits axes excentrés (EA11a, EA11b et EA11c) étant décalés et répartis angulairement de façon équidistante autour dudit axe de centre d'arbre (CA11);
- un ensemble de plaques (12) constitué par au moins trois plaques de rotation (13, 14 et 15) ayant chacune une portion de crémaillère (13a, 14a ou 15a) formée avec une pluralité de dents (13b, 14b ou 15b) qui sont latéralement juxtaposées les unes aux autres de telle façon que lesdites portions de crémaillère (13a, 14a et 15a) sont adjacentes les unes aux autres, lesdites plaques de rotation (13, 14 et 15) étant formées avec des trous traversants coudés (13c, 14c et 15c) qui ont des axes de centre de trou, respectivement, disposés parallélement les uns aux autres et audit axe central d'arbre (CA11), les axes de centre de trou étant décalée et répartis angulairement de façon équidistante autour de l'axe de centre d'arbre (CA11), lesdites portions d'arbre coudé (11a, 11b et 11c) étant reçues à rotation dans lesdits trous traversants coudés (13c, 14c et 15c), respectivement ; et
- un boîtier d'ensemble de plaques (23) supportant ledit ensemble de plaques (12) ; caractérisé par
- un rail denté annulaire (19 ; 41) ayant un plan circonférentiel médian (MP) coupé perpendiculairement par ledit axe de centre d'arbre (CA11) et ayant une surface intérieure ou extérieure (19a ou 41a) configurée pour avoir une pluralité de dents (19b ou 41b) tenues en engagement avec les dents (13b, 14b et 15b) de chacune desdites portions de crémaillère (13a, 14a et 15a),
- ledit boîtier d'ensemble de plaques (23) au ledit rail denté annulaire (19 ; 41) étant tenu en position fixe de telle sorte que le mouvement de rotation dudit arbre de rotation (11) provoque la rotation de chacune desdites plaques de rotation (13, 14 et 15) par rapport audit axe de centre d'arbre (CA11) dudit arbre de rotation (11) et est transformé en un mouvement curviligne relatif entre ledit rail denté annulaire (19) et ledit ensemble de plaques (12).

2. Mécanisme de transformation de mouvement selon la revendication 1, dans lequel lesdites dents (13b, 14b, 15b) desdites plaques de rotation (13, 14, 15) ont une configuration en vagues en section transversale prise le long du plan circonférentiel médian dudit rail denté annulaire (19 ou 41) et dans lequel chacune desdites dents (19b ou 41b) dudit rail denté annulaire (19 ou 41) a une configuration semi-circulaire en section transversale prise le long dudit plan circonférenciel médian dudit rail denté annulaire (19 ou 41),

3. Mécanisme de transformation de mouvement selon la revendication 2, dans lequel ledit rail denté annulaire (19 ou 41) comprend un élément annulaire et une pluralité de broches cylindriques fixes chacune encastrée partiellement dans et dépassant partiellement dudit élément annulaire pour former lesdites dents (19b ou 41b) dudit rail denté annulaire (19 ou 41).

4. Mécanisme de transformation de mouvement selon la revendication 2, dans lequel ledit rail denté annulaire (19 ou 41) comprend un élément annulaire et une pluralité de broches cylindriques rotatives supportées à rotation par ledit élément annulaire, chacune desdites dents (19b ou 41b) dudit rail denté annulaire (19 ou 41) étant formée par une portion semi-circulaire de chacune desdites broches cylindriques rotatives faisant face auxdites plaques de rotation (13, 14, 15).

5. Mécanisme de transformation de mouvement selon la revendication 2, dans lequel lesdites dents (13b, 14b, 15b) desdites plaques de rotation (13, 14, 15) sont sous la forme d'un profil de dent cycloïdal.

6. Mécanisme de transformation de mouvement selon la revendication 2, dans lequel lesdites dents (13b, 14b, 15b) desdites plaques de rotation (13, 14, 15) sont sous la forme d'un profil de dent trochoïdal.

7. Mécanisme de transformation de mouvement selon la revendication 1, dans lequel chacune desdites dents (13b, 14b, 15b) desdites plaques de rotation (13, 14, 15) a une configuration semi-circulaire en section transversale prise le long dudit plan circonférentiel médian dudit rail denté annulaire (19 ou 41) et dans lequel lesdites dents (19b ou 41b) dudit rail denté annulaire (19 ou 41) ont une configuration en vagues en section transversale prise le long dudit plan circonférentiel médian dudit rail denté annulaire (19 ou 41).

8. Mécanisme de transformation de mouvement selon la revendication 7, dans lequel chacune desdites plaques de rotation (13, 14, 15) comprend un élément de plaque et une pluralité de broches cylindriques fixes chacune partiellement encastrée dans et partiellement dépassant de chacun desdits éléments de plaque pour former lesdites dents (13b, 14b, 15b) de chacune desdites plaques de rotation (13, 14, 15).

9. Mécanisme de transformation de mouvement selon la revendication 7, dans lequel chacune desdites plaques de rotation (13. 14, 15) comprend un élément de plaque et une pluralité de broches cylindriques rotatives supportées à rotation par chacun desdits éléments de plaque, chacune desdites dents (13b, 14b, 15b) desdites plaques de rotation (13, 14, 15) étant formée par une portion semi-circulaire de chacune desdites broches cylindriques rotatives faisant face audit rail denté annulaire (19 ou 41).

10. Mécanisme de transformation de mouvement selon la revendication 7, dans lequel lesdites dents (19b ou 41b) dudit rail denté annulaire (19 ou 41) sont sous la forme d'un profil de dent cycloïdal.

11. Mécanisme de transformation de mouvement selon la revendication 7, dans lequel lesdites dents (19b ou 41b) dudit rail denté annulaire (19 ou 41) sont sous la forme d'un profil de dent trochoïdal.

12. Mécanisme de transformation de mouvement selon la revendication 1, comprenant en outre un arbre de rotation additionnel (22) ayant un axe de centre coupant perpendiculairement ledit plan circonférentiel médian dudit rail denté annulaire (19 ou 41) et formé avec au moins trois portions d'arbre coudé ayant des axes excentrés respectifs disposés parallèlement les uns aux autres et à l'axe de centre dudit arbre de rotation additionnel (22), les axes excentrés étant décalés et répartis angulairement de façon équidistante autour de l'axe de centre dudit arbre de rotation additionnel (22),
dans lequel lesdites plaques de rotation (13, 14, 15) dudit ensemble de plaques (12) sont formées avec des trous traversants coudés additionnels (13d, 14d, 15d) ayant des axes de centre, respectivement, disposés parallèlement les uns aux autres et à l'axe de centre dudit arbre de rotation additionnel (22), les axes de centre desdits trous traversants coudés additionnels (13d, 14d, 15d) étant décalés et répartis de façon équidistante autour de l'axe de centre dudit arbre de rotation additionnel (22), et lesdites portions d'arbre coudé dudit arbre de rotation additionnel (22) étant reçues à rotation dans lesdits trous traversants coudés additionnels (13d, 14d, 15d) desdites plaques de rotation, respectivement.

13. Mécanisme de transformation de mouvement selon la revendication 1, comprenant en outre au moins trois roulements à aiguilles (16, 17, 18) reçus dans lesdits trous traversants coudés (13c, 14c, 15c) desdites plaques de rotation (13, 14, 15) pour permettre de fixer dans ceux-ci lesdites portions d'arbre coudé (11a, 11b, 11c) dudit arbre de rotation (11), respectivement.

14. Mécanisme de transformation de mouvement selon la revendication 1, dans lequel
- ledit boîtier d'ensemble de plaques (23) comprenant deux éléments de plaque latéraux (26 et 27) écartés l'un de l'autre pour supporter à rotation ledit arbre de rotation (11) et une plaque de couverture (28) reliée solidairement à ses portions d'extrémité latérales auxdits éléments de plaque latéraux (26 et 27) pour définir une chambre (29) en coopération avec ledit rail denté annulaire (19 ou 41) pour recevoir ledit ensemble de plaques (12) à l'intérieur, lesdits éléments de plaque latéraux (26 et 27) étant formés avec des portions de surface latérale intérieure ayant chacune une rainure de guidage (26b ou 27b) formée sur elle pour s'étendre le long dudit rail denté annulaire (19 ou 41) et un chemin de guidage (26c ou 27c) formé sur elle pour être ouvert sur et connecté aux portions d'extrémité opposées de ladite rainure de guidage (26b ou 27b) ;
- une pluralité de billes rotatives (30 et 31) reçues à rotation et se déplaçant dans lesdites rainures de guidage (26b et 27b) et lesdits chemins de guidage (26c et 27c) desdites portions de surface latérale intérieure desdits éléments de plaque latéraux (26 et 27) ; et
- un élément de renfort annulaire (32) s'étendant en long pour supporter de façon sûre ledit rail annulaire denté (19 ou 41) et ayant des portions de surface latérale faisant face respectivement auxdites portions de surface latérale intérieure desdits éléments de plaque latéraux (26 et 27) dudit boîtier d'ensemble de plaques (23), chacune desdites portions de surface latérale dudit élément de renfort annulaire (32) ayant une rainure de guidage (32c ou 32d) formée sur elle en opposition à ladite rainure de guidage (26b ou 27b) de ladite portion de surface latérale intérieure de chacun desdits éléments de plaque latéraux (26 et 27) dudit boîtier d'ensemble de plaques (23), lesdites billes rotatives (30 et 31) étant reçues dans lesdites rainures de guidage (26b et 27b) desdites portions de surface latérale intérieure desdits éléments de plaque latéraux (26 et 27) et dans lesdites rainures de guidage (32c et 32d) desdites portions de surface latérale dudit élément de renfort annulaire (32) pour être déplacées en roulement d'une manière qui régule de façon invariable l'écart entre chacune des surfaces latérales intérieures desdits éléments de plaque latéraux (26 et 27) et chacune des surfaces latérales dudit rail denté annulaire (19 ou 41) et qui assure la régulation de façon invariable de la distance entre l'axe de centre dudit arbre de rotation (11) et le cercle d'enveloppe dudit rail denté annulaire (19 ou 41) pour faciliter le déplacement relatif doux dudit rail denté annulaire (19 ou 41) par rapport audit ensemble de plaques (12) lorsque lesdites billes rotatives (30 et 31) se déplacent à travers lesdites rainures de guidage (26b et 27b) et lesdits chemins de guidage (26c et 27c) desdites portions de surface latérale intérieure desdits éléments de plaque latéraux (26 et 27) audit boîtier d'ensemble de plaques (23).

15. Mécanisme de transformation de mouvement, comprenant ;
- un arbre de rotation (11) ayant un axe de centre d'arbre (CA11) et formé avec au moins trois portions d'arbre coudé (11a, 11b et 11c) ayant des axes excentrés respectifs (EA11a, EA11b et EA11c) disposés parallèlement les uns aux autres et à l'axe de centre d'arbre (CA11), les axes excentrés (EA11a, EA11b et EA11c) étant décalés et répartis angulairement de façon équidistante autour dudit axe de centre d'arbre (CA11) ;
- un ensemble de plaques (12) constitué par au moins trois plaques de rotation (13, 14, 15) ayant chacune une portion de crémaillère (13a, 14a, 15a) formée avec une pluralité de dents (13b, 14b, 15b) qui sont latéralement juxtaposées les unes aux autres de façon que lesdites portions de crémaillère (13a, 14a, 15a) soient adjacentes les unes aux autres, lesdites plaques de rotation (13, 14, 15) étant formées avec des trous traversants coudés (13c, 14c, 15c) qui ont des axes de centre de trou, respectivement, disposés parallèlement les uns aux autres et à l'axe de centre d'arbre (CA11), lesdits axes de centre de trou étant décalés et répartis angulairement de façon équidistante autour audit axe de centre d'arbre (CA11), et lesdites portions d'arbre coudé (11a, 11b, 11c) étant reçues à rotation dans lesdits trous traversants coudés (13c, 14c, 15c), respectivement ; et
- un boîtier d'ensemble de plaques (23) supportant ledit ensemble de plaques (12) ; caractérisé par
- un rail denté incurvé (50 ; 60) ayant un plan circonférentiel médian coupé perpendiculairement par ledit axe de centre d'arbre (CA11) et s'étendant en arc sur ledit plan circonférentiel médian, ledit rail denté incurvé (50 ; 60) ayant une surface intérieure ou extérieure (- ou 61a) configurée pour avoir une pluralité de dents tenues en engagement avec les dents (13b, 14b, 15b) de chacune desdites portions de crémaillère (13a, 14a, 15a), ledit boîtier d'ensemble de plaques (23) ou ledit rail denté incurvé (50 ; 60) étant tenu en position fixe de telle sorte que le mouvement de rotation dudit arbre de rotation (11) provoque la rotation de chacune desdites plaques de rotation (13, 14, 15) par rapport audit axe de centre d'arbre (CA11) et est transformé en un mouvement relatif curviligne entre ledit rail denté incurvé (50 ; 60) et ledit ensemble de plaques (12).

16. Mécanisme de transformation de mouvement selon la revendication 15, dans lequel lesdites dents (13b, 14b, 15b) desdites plaques de rotation (13, 14, 15) ont une configuration en vague en section transversale prise le long dudit plan circonférentiel médian dudit rail denté incurvé (50 ou 60) et dans lequel chacune desdites dents dudit rail denté incurvé (50 ou 60) a une configuration semi-circulaire en section transversale prise le long dudit plan circonférentiel médian dudit rail denté incurvé (50 ou 60).

17. Mécanisme de transformation de mouvement selon la revendication 16, dans lequel ledit rail denté incurvé (60 ou 60) comprend un élément incurvé et une pluralité de broches cylindriques fixes chacune partiellement encastrée dans et dépassant partiellement dudit élément incurvé pour former lesdites dents dudit rail denté incurvé (50 ou 60).

18. Mécanisme de transformation de mouvement selon la revendication 16, dans lequel ledit rail denté incurvé (50 ou 60) comprend un élément incurvé et une pluralité de broches cylindriques rotatives supportées à rotation par ledit élément incurvé, chacune desdites dents dudit rail denté incurvé (50 ou 60) étant formée par une portion semi-circulaire de chacune desdites broches cylindriques rotatives faisant face auxdites plaques de rotation (13, 14, 15).

19. Mécanisme de transformation de mouvement selon la revendication 16, dans lequel lesdites dents (13b, 14b, 15b) desdites plaques de rotation (13, 14, 15) sont sous la forme d'un profil de dent cycloïdal.

20. Mécanisme de transformation de mouvement selon la revendication 16, dans lequel lesdites dents (13b, 14b, 15b) desdites plaques de rotation (13, 14, 15) sont sous la forme d'un profil de dent trochoïdal.

21. Mécanisme de transformation de mouvement selon la revendication 15, dans lequel chacune desdites dents (13b, 14b, 15b) desdites plaques de rotation (13, 14, 15) a une configuration semi-cylindrique en section transversale prise le long dudit plan circonférentiel médian dudit rail denté incurvé (50 ou 60) et dans lequel lesdites dents dudit rail denté incurvé (50 ou 60) ont une configuration en vagues en section transversale prise le long dudit plan circonférentiel médian dudit rail denté incurvé (50 ou 60).

22. Mécanisme de transformation de mouvement selon la revendication 21, dans lequel chacune desdites plaques de rotation (13, 14, 15) comprend un élément de plaque et une pluralité de broches cylindriques fixes chacune partiellement encastrée dans et partiellement dépassant de chacun desdits éléments de plaque pour former lesdites dents (13b, 14b, 15b) de chacune desdites plaques de rotation.

23. Mécanisme de transformation de mouvement selon la revendication 21, dans lequel chacune desdites plaques de rotation (13, 14, 15) comprend un élément de plaque et une pluralité de broches cylindriques rotatives supportées à rotation par chacun desdits éléments de plaque, chacune desdites dents (13b, 14b, 15b) desdites plaques de rotation étant formée par une portion semi-circulaire de chacune desdites broches cylindriques rotatives faisant face audit rail denté incurvé (50 ou 60).

24. Mécanisme de transformation de mouvement selon la revendication 21, dans lequel lesdites dents dudit rail denté incurvé (50 ou 60) sont sous la forme d'un profil de dent cycloïdal.

25. Mécanisme de transformation de mouvement selon la revendication 21, dans lequel lesdites dents dudit rail incurvé (50 ou 60) sont sous la forme d'un profil de dent trochoïdal.

26. Mécanisme de transformation de mouvement selon la revendication 15, comprenant en outre un arbre de rotation additionnel (22) ayant un axe de centre coupant perpendiculairement ledit plan circonférentiel médian dudit rail denté incurvé (50 ou 60) et formé avec au moins trois portions d'arbre coudé ayant des axes excentrés respectifs disposés parallèlement les uns aux autres et à l'axe de centre dudit arbre de rotation additionnel (22), les axes desdites portions d'arbre coudé étant décalés et répartis angulairement de façon équidistante autour de l'axe de centre dudit arbre de rotation additionnel (22),
dans lequel lesdites plaques de rotation (13, 14, 15) dudit ensemble de plaques (12) sont formées avec des trous traversants coudés additionnels (13d, 14d, 15d) ayant des axes de centre, respectivement, disposés parallèlement les uns aux autres et à l'axe de centre dudit arbre de rotation additionnel (22), les axes de centre desdits trous traversants coudés additionnels (13d, 14d, 15d) étant décalés et répartis angulairement de façon équidistante autour de l'axe de centre dudit arbre de rotation additionnel (22), et lesdites portions d'arbre coudé dudit arbre de rotation additionnel (22) étant reçues à rotation dans lesdits trous traversants coudés additionnels (13d, 14d, 15d) desdites plaques de rotation, respectivement.

27. Mécanisme de transformation de mouvement selon la revendication 15, comprenant en outre au moins trois roulements à aiguilles (16, 17, 18) reçus dans lesdits trous traversants coudés (13c, 14c, 15c) desdites plaques de rotation (13, 14, 15) pour permettre la fixation dans celle-ci desdites portions d'arbre coudé dudit arbre de rotation (11), respectivement.

28. Mécanisme de transformation de mouvement selon la revendication 15, comprenant en outre :
- ledit boîtier d'ensemble de plaques (23) qui inclut deux éléments de plaque latéraux (26 et 27) espacés l'un de l'autre pour supporter à rotation ledit arbre de rotation (11) et une plaque de couverture (28) connectée de façon solidaire selon ses portions d'extrémité latérales auxdits éléments de plaque latéraux (26 et 27) pour définir une chambre (29) en coopération avec ledit rail denté incurvé (50 ou 60) pour recevoir ledit ensemble de plaques (12) à l'intérieur, lesdits éléments de plaque latéraux (26 et 27) étant formés avec des portions de surface latérale intérieure respectives ayant chacune une rainure de guidage (26b ou 27b) formée sur elle pour s'étendre le long dudit rail denté incurvé (50 ou 60) et un chemin de guidage (26c ou 27c) formé sur elle pour être ouvert sur et connecté aux portions d'extrémité opposées de ladite rainure de guidage (26b ou 27b) ;
- une pluralité de billes rotatives (30 et 31) reçues à rotation et à déplacement dans lesdites rainures de guidage (26b et 27b) et lesdits chemins de guidage (26c et 27c) desdites portions de surface latérale intérieure desdits éléments de plaque latéraux (26 et 27) ; et
- un élément de renfort incurvé s'étendant en long pour supporter de façon sûre ledit rail denté incurvé (50 ou 60) et ayant des portions de surface latérale faisant face respectivement auxdites portions de surface latérale intérieure desdits éléments de plaque latéraux (26 et 27) dudit boîtier d'ensemble de plaques (23), chacune desdites portions de surface latérale dudit élément de renfort incurvé ayant une rainure de guidage formée sur elle en opposition à ladite rainure de guidage de ladite portion de surface latérale intérieure de chacun desdits éléments de plaque latéraux dudit boîtier d'ensemble de plaques (23), lesdites billes rotatives (30 et 31) étant reçues dans lesdites rainures de guidage (26b et 27b) desdites portions de surface latérale intérieure desdits éléments de plaque latéraux (26 et 27) et dans lesdites rainures de guidage desdites portions de surface latérale dudit élément de renfort incurvé pour être déplacées en roulement de façon à réguler de manière invariable l'écart entre les surfaces latérales intérieures desdits éléments de plaque latéraux (26 et 27) et chacune des surfaces latérales de l'élément de rail denté incurvé et régulant de manière invariable la distance entre l'axe de centre dudit arbre de rotation (11) et le cercle d'enveloppe dudit rail denté incurvé (50 ou 60) pour faciliter le mouvement relatif doux dudit rail denté incurvé (50 ou 60) par rapport audit ensemble de plaques (12) tandis que lesdites billes rotatives (30 et 31) se déplacent à travers lesdites rainures de guidage (26b et 27b) et lesdits chemins de guidage (26c et 27c) desdites portions de surface latérale intérieure desdits éléments de plaque latéraux (26 et 27) dudit boîtier d'ensemble de plaques (12).
